# EUROPEAN PATENT APPLICATION

(11) **EP 4 721 951 A1**
(43) Date of publication of application: **08.04.2026**
(21) Application number: 24815414.8
(22) Date of filing: 24.05.2024
(51) Int. Cl.: B29C 49/50, B29C 45/17, B29C 49/04, B29C 49/72

(54) **MOLDING MOLD AND METHOD FOR PRODUCING MOLDED ARTICLE**

(30) Priority: 30.05.2023 JP 2023088921
(71) Applicant: Kyoraku Co., Ltd., Kyoto-shi, Kyoto 602-0912 (JP)
(72) Inventor: TANJI, Tadatoshi, Yamato-shi, Kanagawa 242-0018 (JP)
(74) Representative: Gulde & Partner
(86) International application number: PCT/JP2024/019258
(87) International publication number: WO 2024/247931

(57) **Abstract**

To provide a mold for molding capable of suppressing a decrease in the manufacturing efficiency of a molded product. According to the present invention, there is provided a mold for molding comprising a first split mold and a second split mold which are configured to open and close relative to each other, comprising a cavity, a pinch-off portion, a burr accommodating space, and an ejector member, wherein the cavity is a space for molding a desired molded product, an outer surface of the cavity is configured by mating cavity surfaces provided on each of the first and second split molds, the pinch-off portion is provided on a mating surface of the first and second split molds so as to surround the cavity, the burr accommodating space is a space provided outside the pinch-off portion for accommodating a burr formed around the molded product, the first split mold comprises a guide hole at a portion facing the burr accommodating space, the ejector member is configured to be able to advance and retract with respect to the burr accommodating space through the guide hole, the second split mold comprises a groove-shaped recess provided facing the burr accommodating space and along the pinch-off portion, the groove-shaped recess comprises an inner side surface extending from the pinch-off portion toward a bottom of the groove-shaped recess, and the inner side surface has a first portion with an inclination angle of 60 degrees or less with respect to a reference plane perpendicular to an opening/closing direction of the first and second split molds.

## Description

### [Technical Field]

The present invention relates to a mold for molding and a method for manufacturing a molded product.

### [Background Art]

PTL 1 discloses a technique for separating a burr from a molded product by projecting an ejector member against the burr adhered to the periphery of the molded product within the mold.

### [Citation List]

### [PTL]

[PTL 1] JP-A-2007-276125

### [Summary of Invention]

### [Technical Problem]

In PTL 1, the ejector member is projected into a groove-shaped recess provided around the pinch-off portion, but the burr separated from the molded product may get stuck in the groove-shaped recess and become difficult to remove. In this case, it takes time and effort to remove the burr from the groove-shaped recess, which reduces the manufacturing efficiency of the molded product.

The present invention has been made in view of such circumstances, and an object thereof is to provide a mold for molding that can suppress a decrease in the manufacturing efficiency of a molded product.

### [Solution to Problem]

According to the present invention, the following inventions are provided.
[1] A mold for molding comprising a first split mold and a second split mold which are configured to open and close relative to each other, comprising a cavity, a pinch-off portion, a burr accommodating space, and an ejector member, wherein the cavity is a space for molding a desired molded product, an outer surface of the cavity is configured by mating cavity surfaces provided on each of the first and second split molds, the pinch-off portion is provided on a mating surface of the first and second split molds so as to surround the cavity, the burr accommodating space is a space provided outside the pinch-off portion for accommodating a burr formed around the molded product, the first split mold comprises a guide hole at a portion facing the burr accommodating space, the ejector member is configured to be able to advance and retract with respect to the burr accommodating space through the guide hole, the second split mold comprises a groove-shaped recess provided facing the burr accommodating space and along the pinch-off portion, the groove-shaped recess comprises an inner side surface extending from the pinch-off portion toward a bottom of the groove-shaped recess, and the inner side surface has a first portion with an inclination angle of 60 degrees or less with respect to a reference plane perpendicular to an opening/closing direction of the first and second split molds.
[2] The mold for molding according to [1], wherein the inner side surface has a second portion at a position farther from the pinch-off portion than the first portion, and the second portion has an inclination angle with respect to the reference plane that is larger than that of the first portion.
[3] The mold for molding according to [1] or [2], wherein the inner side surface is provided with a local recess extending along an advancing/retreating direction of the ejector member at a position facing the ejector member when the ejector member is projected into the groove-shaped recess.
[4] The mold for molding according to any one of [1] to [3], wherein the mold for molding comprises a burr clamping portion, the burr clamping portion is provided on the mating surface of the first and second split molds outside the pinch-off portion, and the burr accommodating space is provided between the pinch-off portion and the burr clamping portion.
[5] The mold for molding according to [4], wherein the groove-shaped recess comprises an outer side surface extending from the burr clamping portion toward the bottom of the groove-shaped recess, and the outer side surface has a first portion with an inclination angle of 60 degrees or less with respect to the reference plane.
[6] A method for manufacturing a molded product, comprising a molding step and a separating step, wherein in the molding step, a molded body is formed by molding a parison using the mold for molding according to any one of [1] to [5], the molded body comprises the molded product formed in the cavity and the burr connected to a periphery of the molded product, and the separating step comprises a step of separating the burr from the molded product by projecting the ejector member into the burr accommodating space.
[7] A mold for molding comprising a first split mold and a second split mold which are configured to open and close relative to each other, comprising a cavity, a pinch-off portion, a burr accommodating space, and an ejector member, wherein the cavity is a space for molding a desired molded product, an outer surface of the cavity is configured by mating cavity surfaces provided on each of the first and second split molds, the pinch-off portion is provided on a mating surface of the first and second split molds so as to surround the cavity, the burr accommodating space is a space provided outside the pinch-off portion for accommodating a burr formed around the molded product, the first split mold comprises a guide hole at a portion facing the burr accommodating space, the ejector member is configured to be able to advance and retract with respect to the burr accommodating space through the guide hole, the second split mold comprises a groove-shaped recess provided facing the burr accommodating space and along the pinch-off portion, the groove-shaped recess comprises an inner side surface extending from the pinch-off portion toward a bottom of the groove-shaped recess, the inner side surface has a first and a second portion, and the second portion is provided at a position farther from the pinch-off portion than the first portion and has an inclination angle with respect to a reference plane perpendicular to an opening/closing direction of the first and second split molds that is larger than that of the first portion.
[8] A mold for molding comprising a first split mold and a second split mold which are configured to open and close relative to each other, comprising a cavity, a pinch-off portion, a burr accommodating space, and an ejector member, wherein the cavity is a space for molding a desired molded product, an outer surface of the cavity is configured by mating cavity surfaces provided on each of the first and second split molds, the pinch-off portion is provided on a mating surface of the first and second split molds so as to surround the cavity, the burr accommodating space is a space provided outside the pinch-off portion for accommodating a burr formed around the molded product, the first split mold comprises a guide hole at a portion facing the burr accommodating space, the ejector member is configured to be able to advance and retract with respect to the burr accommodating space through the guide hole, the second split mold comprises a groove-shaped recess provided facing the burr accommodating space and along the pinch-off portion, the groove-shaped recess comprises an inner side surface extending from the pinch-off portion toward a bottom of the groove-shaped recess, and the inner side surface is provided with a local recess extending along an advancing/retreating direction of the ejector member at a position facing the ejector member when the ejector member is projected into the groove-shaped recess.

### [Advantageous Effects of Invention]

In the mold for molding of the present invention, since the inner side surface of the groove-shaped recess provided along the pinch-off portion is provided with a first portion having a gentle inclination angle of 60 degrees or less, it is suppressed that the burr separated from the molded product gets stuck in the groove-shaped recess and becomes difficult to remove, thereby suppressing a decrease in the manufacturing efficiency of the molded product.

### [Brief Description of Drawings]

FIG. 1 is a front view showing a state in which a parison 2 is placed between first and second split molds 11, 12 constituting a mold for molding 1 in a molding step of a manufacturing method according to an embodiment of the present invention.
FIG. 2 is a view of the first split mold 11 of FIG. 1 as seen from the parison 2 side.
FIG. 3 is a view of the second split mold 12 of FIG. 1 as seen from the parison 2 side.
FIG. 4A is a partial perspective view showing a state in which the first and second split molds 11, 12 of the mold for molding 1 of FIG. 1 are in a closed state and a part thereof is cut away. FIG. 4B is a view of the mold for molding 1 of FIG. 4A as seen from a direction perpendicular to the cross section of FIG. 4A.
FIG. 5 is a perspective view of the first split mold 11 and the second split mold 12 of the mold for molding 1 of FIG. 4A as seen from different directions.
FIG. 6A is a view showing a state in which the first and second split molds 11, 12 of FIG. 4B are opened, and FIGS. 6B and 6C are enlarged views of regions B and C in FIG. 6A, respectively.
FIG. 7A is a cross-sectional view parallel to the cross section of FIG. 4B and passing through the central axis of the ejector member 16, and FIG. 7B is an enlarged view of region B in FIG. 7A.
FIG. 8A is a cross-sectional view corresponding to FIG. 7A, showing a state after a molded body 3 is formed by molding a parison 2 sandwiched between the first and second split molds 11, 12, and FIG. 8B is a view of the molded body 3 extracted from region A in FIG. 8A.
FIG. 9A is an enlarged view of region A in FIG. 8A, and FIG. 9B shows a state after a cooling medium is blown onto the burr 5 through a burr cooling hole 12i from the state of FIG. 8A.
FIG. 10A shows a state in which the burr 5 is being pressed by the ejector member 16 from the state of FIG. 9A, and FIG. 10B shows a state after the burr 5 is further pressed from the state of FIG. 10A.
FIG. 11 is a view corresponding to FIG. 7B, showing a modified example of the first and second split molds 11, 12.

### [Description of Embodiments]

Hereinafter, embodiments of the present invention will be described. Various features shown in the embodiments described below can be combined with each other. In addition, an invention can be established independently for each feature.

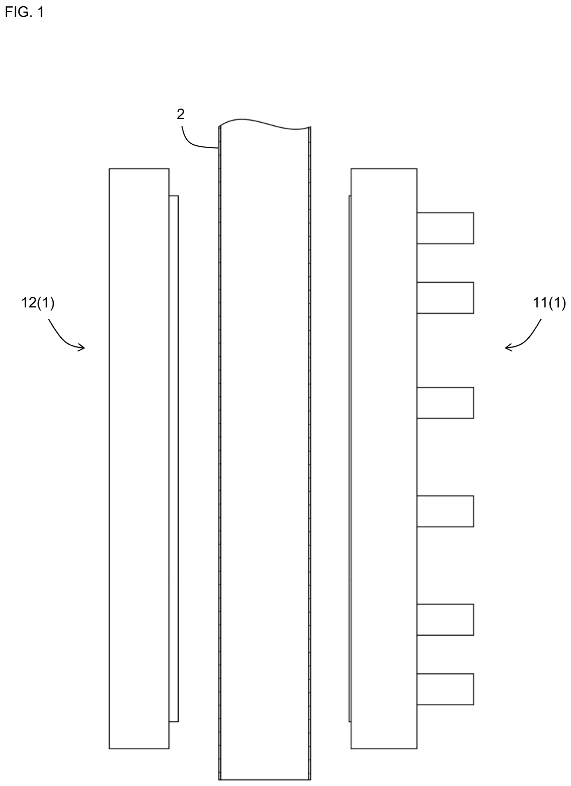

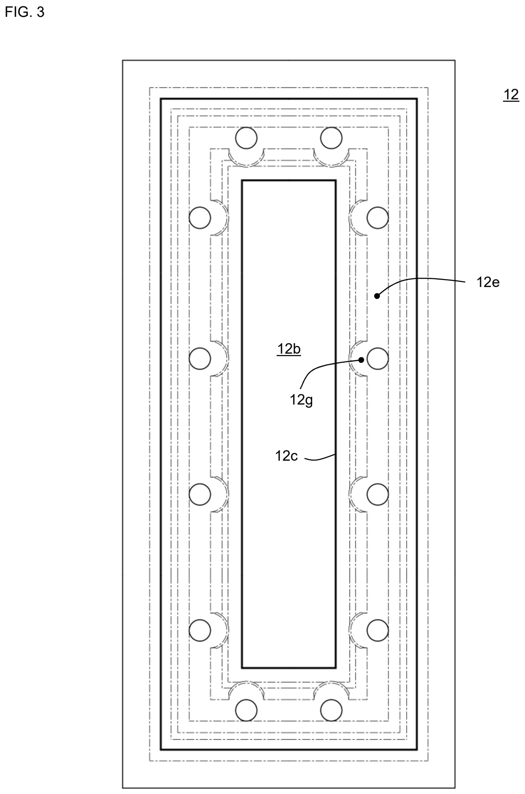

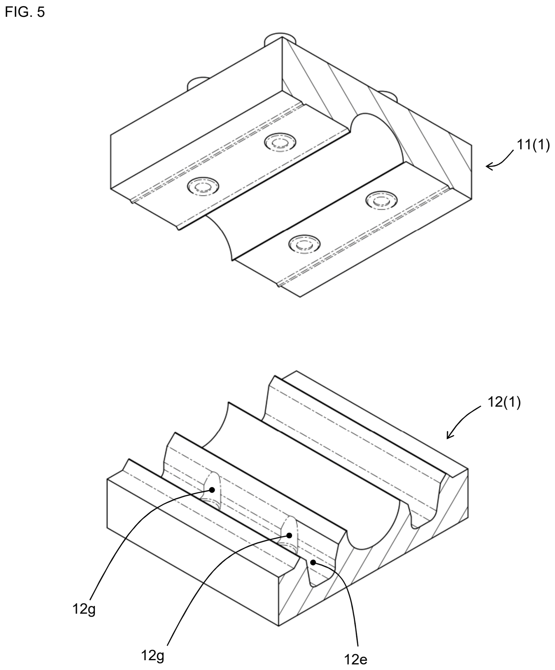

A method for manufacturing a molded product according to an embodiment of the present invention will be described with reference to FIGS. 1 to 10. Examples of the molded product 4 manufactured by this method include hollow molded products such as ducts and sheet-molded products such as door trims. The molded product 4 may be a foam-molded product or a non-foam-molded product. This method comprises a molding step and a separating step. It is preferable to provide a cooling step between the molding step and the separating step. Hereinafter, each step will be described.

### 1. Molding Step

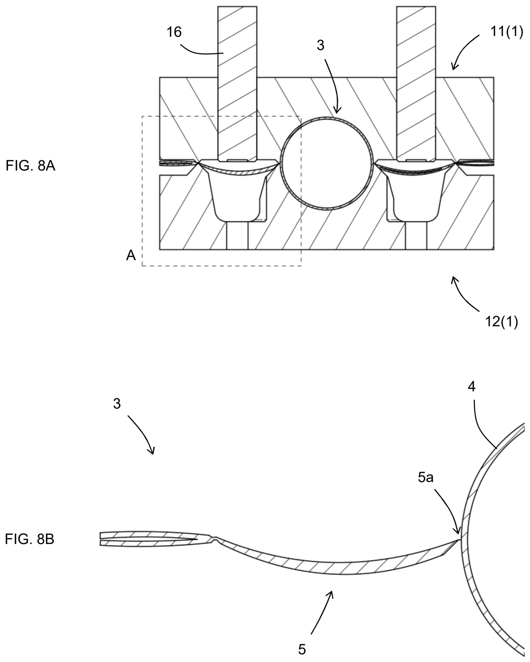

As shown in FIGS. 1 and 8, in the molding step, a molded body 3 is formed by molding a parison 2 using a mold for molding 1. The molded body 3 has a structure in which a burr 5 is connected to the periphery of a molded product 4. The burr 5 has a thin-walled portion 5a at a portion connected to the molded product 4, and the burr 5 can be separated from the molded product 4 by tearing the thin-walled portion 5a. The molding method is not particularly limited as long as it can provide the molded body 3 in which the burr 5 is connected to the periphery of the molded product 4, and examples thereof include blow molding and vacuum molding. These moldings may be direct molding in which a parison 2 formed by extruding a molten resin is used for molding without cooling, or may be molding performed using a cooled parison that has been reheated, but direct molding is preferable. The shape of the parison 2 is not particularly limited, and may be tubular or sheet-like. The resin used for molding is arbitrary, and for example, a thermoplastic resin such as a polyolefin resin such as polypropylene is used. In one example, a molded body for a duct is molded by direct blow molding using a tubular parison 2.

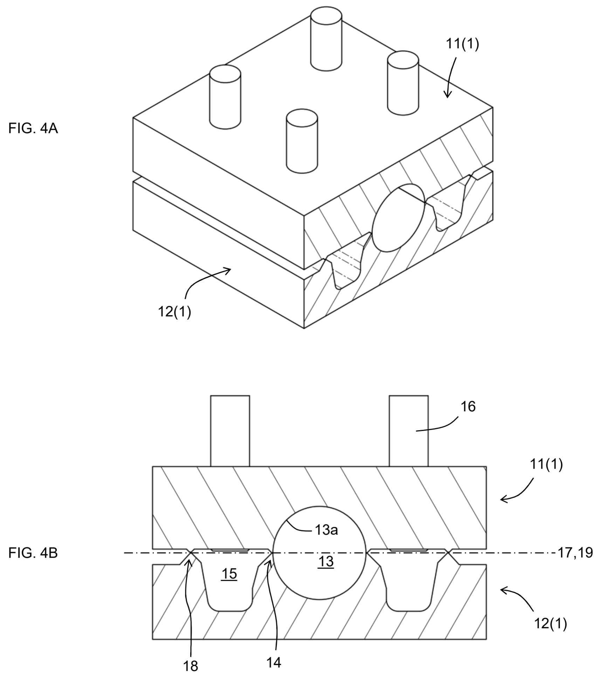

As shown in FIG. 4, the mold for molding 1 has a first split mold 11 and a second split mold 12 which are configured to open and close relative to each other. The mold for molding 1 also includes a cavity 13, a pinch-off portion 14, a burr accommodating space 15, and an ejector member 16.

As shown in FIGS. 4 to 7, the cavity 13 is a space for molding a desired molded product 4, and a cavity outer surface 13a is configured by mating split cavity surfaces 11a, 12a provided on each of the first and second split molds 11, 12. In one example, the cavity 13 is formed by mating split cavities 11b, 12b provided on each of the first and second split molds 11, 12. The cavity outer surface 13a has a shape corresponding to the outer surface of the molded product 4. By blowing air into the parison 2 formed into a bag shape in the cavity 13, or by suctioning the parison 2 under reduced pressure from the cavity outer surface 13a, the parison 2 can be shaped into a shape along the cavity outer surface 13a.

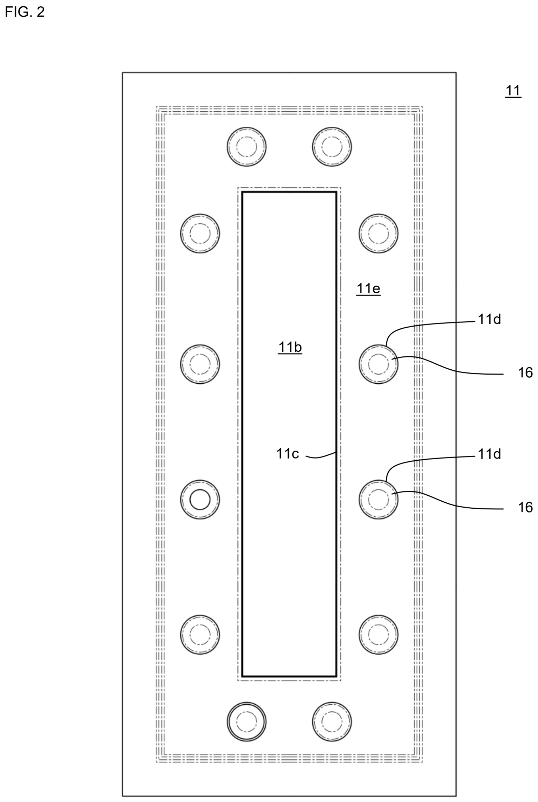

The pinch-off portion 14 is provided on the mating surface 17 of the first and second split molds 11, 12 so as to surround the cavity 13. The pinch-off portion 14 is preferably provided over the entire circumference of the cavity 13. In the pinch-off portion 14, the parison 2 is clamped and thinned to become a thin-walled portion 5a. As shown in FIG. 2, the first split mold 11 is provided with a protruding ridge 11c surrounding the split cavity 11b, and the second split mold 12 is provided with a protruding ridge 12c surrounding the split cavity 12b, and the pinch-off portion 14 is configured by pressing the protruding ridges 11c and 12c against each other. The widths of the protruding ridges 11c and 12c may be different from each other, and one of the protruding ridges 11c and 12c may be a flat surface. The width of the pinch-off portion 14 is, for example, 0.1 to 3.0 mm, and preferably 0.2 to 1.0 mm (0.5 mm in this embodiment). This width is, specifically, for example, 0.1, 0.2, 0.3, 0.4, 0.5, 0.6, 0.7, 0.8, 0.9, 1.0, 1.5, 2.0, 2.5, 3.0 mm, and may be a range between any two of the numerical values exemplified here.

The burr accommodating space 15 is a space provided outside the pinch-off portion 14 for accommodating the burr 5 formed around the molded product 4. The burr accommodating space 15 is preferably provided so as to surround the pinch-off portion 14. The burr accommodating space 15 is preferably an elongated space. Since the burr accommodating space 15 is a space enclosed by the first and second split molds 11, 12, the first and second split molds 11, 12 each have a portion facing the burr accommodating space 15.

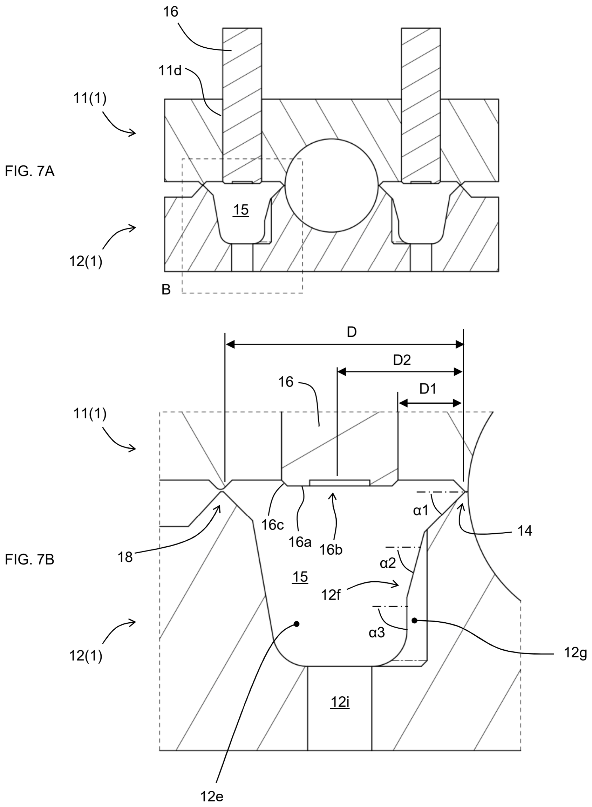

As shown in FIG. 7, the first split mold 11 includes a guide hole 11d at a portion facing the burr accommodating space 15. The ejector member 16 is configured to be able to advance and retract with respect to the burr accommodating space 15 through the guide hole 11d. As shown in FIGS. 8 to 10, by projecting the ejector member 16 from the first split mold 11 side toward the burr 5 in the burr accommodating space 15 and pressing the burr 5 toward the second split mold 12 side, the thin-walled portion 5a is torn and the burr 5 is separated from the molded product 4. As shown in FIG. 2, a plurality of guide holes 11d and ejector members 16 are preferably provided along the pinch-off portion 14.

In order to enhance the separability of the burr 5, the ejector member 16 is preferably disposed at a position as close as possible to the pinch-off portion 14. The distance D1 (shown in FIG. 7B) between the pinch-off portion 14 and the ejector member 16 is, for example, 3 to 20 mm, and preferably 5 to 15 mm (10 mm in this embodiment). The distance D2 between the central axis of the ejector member 16 and the pinch-off portion 14 is, for example, 10 to 30 mm, and preferably 15 to 25 mm (20 mm in this embodiment). If these values are too small, the ejector member 16 tends to interfere with the second split mold 12, and if these values are too large, the separability of the burr 5 may be deteriorated. D1 is, specifically, for example, 3, 4, 5, 6, 7, 8, 9, 10, 11, 12, 13, 14, 15, 16, 17, 18, 19, 20 mm, and may be a range between any two of the numerical values exemplified here. D2 is, specifically, for example, 10, 11, 12, 13, 14, 15, 16, 17, 18, 19, 20, 21, 22, 23, 24, 25, 26, 27, 28, 29, 30 mm, and may be a range between any two of the numerical values exemplified here.

The diameter of the ejector member 16 is, for example, 5 to 40 mm, preferably 10 to 30 mm, and more preferably 15 to 25 mm (20 mm in this embodiment). If this value is too small, the separability of the burr 5 may be lowered, and if this value is too large, the burr accommodating space 15 becomes large, which may lead to an increase in the mold size. This value is, specifically, for example, 5, 10, 15, 20, 25, 30, 35, 40 mm, and may be a range between any two of the numerical values exemplified here.

As shown in FIG. 7B, a recess 16b is provided in the center of the tip surface 16a of the ejector member 16. A tapered surface 16c is provided on the periphery of the tip surface 16a. This makes it easier for the tip surface 16a to bite into the burr 5, making it difficult for the burr 5 to slip with respect to the tip surface 16a when the ejector member 16 is projected, and making it easier for the force applied by the ejector member 16 to be transmitted to the burr 5.

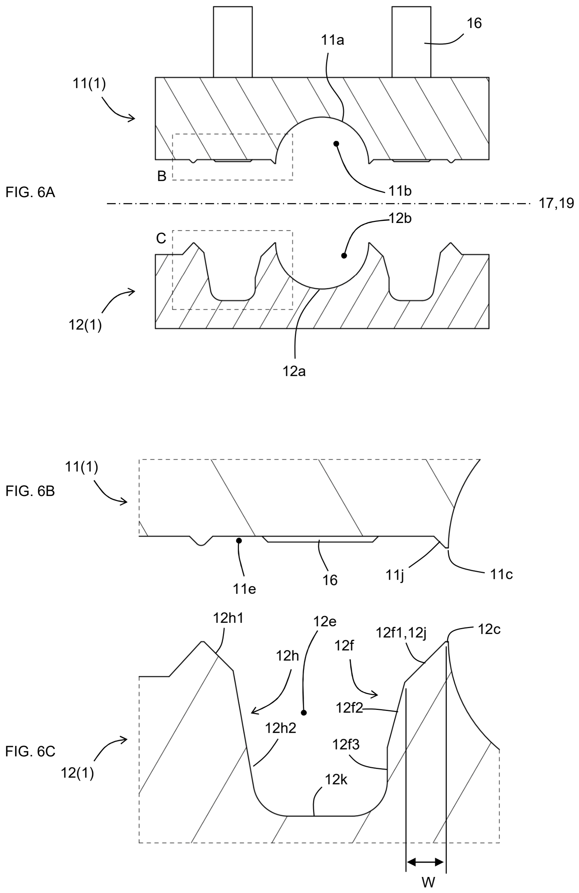

As shown in FIG. 6, in the present embodiment, the first and second split molds 11, 12 are respectively provided with groove-shaped recesses 11e, 12e facing the burr accommodating space 15 and along the pinch-off portion 14. The groove-shaped recesses 11e, 12e are combined to form the burr accommodating space 15. Note that the first split mold 11 may not be provided with the groove-shaped recess 11e, and the portion facing the burr accommodating space 15 may be, for example, a flat surface.

The depth of the groove-shaped recess 11e of the first split mold 11 is, for example, 0 to 5.0 mm, preferably 1.0 to 4.0 mm, and more preferably 2.0 to 3.0 mm (2.5 mm in this embodiment). Note that a depth of 0 mm means that the portion facing the burr accommodating space 15 is a flat surface. If this value is too small, the resin pushed out from the pinch-off portion 14 tends to move toward the cavity 13 instead of the burr accommodating space 15, and when the molded product 4 is a hollow body, resin build-up tends to occur on the inner surface of the molded product 4. If this value is too large, the separability of the burr 5 by the ejector member 16 tends to be lowered.

The depth of the groove-shaped recess 12e of the second split mold 12 is, for example, 10 to 50 mm, preferably 20 to 40 mm, and more preferably 25 to 35 mm (30 mm in this embodiment). If this value is too small, the stroke of the ejector member 16 becomes too short, and the separability of the burr 5 may be lowered. If this value is too large, the burr 5 may get stuck in the groove-shaped recess 12e and become difficult to remove. This value is, specifically, for example, 10, 15, 20, 25, 30, 35, 40, 45, 50 mm, and may be a range between any two of the numerical values exemplified here.

The groove-shaped recess 12e of the second split mold 12 includes an inner side surface 12f extending from the pinch-off portion 14 toward the bottom 12k of the groove-shaped recess 12e. The inner side surface 12f has a first portion 12f1 with an inclination angle α1 (shown in FIG. 7B) of 60 degrees or less with respect to a reference plane 19 perpendicular to the opening/closing direction of the first and second split molds 11, 12 (the left-right direction in FIG. 1, the up-down direction in FIG. 6A) (in this embodiment, α1 = 45 degrees). By providing such a portion on the inner side surface 12f, it is suppressed that the separated burr 5 gets stuck in the groove-shaped recess 12e and becomes difficult to remove. The angle of the first portion 12f1 is, for example, 15 to 60 degrees, preferably 20 to 55 degrees, and more preferably 25 to 50 degrees. This value is, for example, specifically, 15, 20, 25, 30, 35, 40, 45, 50, 55, 60 degrees, and may be a range between any two of the numerical values exemplified here or any value less than or equal to any of them. The first portion 12f1 may be a flat surface or a curved surface (a flat surface in this embodiment). In this embodiment, since the mating surface 17 and the reference plane 19 are parallel, in FIGS. 4B and 6A, the same straight line is denoted by the reference numerals of the mating surface 17 and the reference plane 19, but the mating surface 17 and the reference plane 19 may be non-parallel.

The first portion 12f1 is preferably provided at a position shallower than the center in the depth direction of the groove-shaped recess 12e, and more preferably provided so as to be continuous with the pinch-off portion 14 (that is, the first portion 12f1 is preferably a connecting portion 12j continuous with the pinch-off portion 14). If the inclination angle of the connecting portion 12j continuous with the pinch-off portion 14 is too large, the protruding ridge 12c constituting the pinch-off portion 14 becomes a thin protruding shape and the strength is lowered, but in this embodiment, since the inclination angle of the connecting portion 12j is 60 degrees or less, the protruding ridge 12c does not become extremely thin, and a decrease in strength is suppressed. This point is also the same for the protruding ridge 11c, and the inclination angle of the connecting portion 11j continuous with the pinch-off portion 14 on the outer side of the pinch-off portion 14 is preferably 60 degrees or less (45 degrees in this embodiment). The inclination angle of the connecting portions 11j, 12j is, for example, specifically, 15, 20, 25, 30, 35, 40, 45, 50, 55, 60 degrees, and may be a range between any two of the numerical values exemplified here or any value less than or equal to any of them.

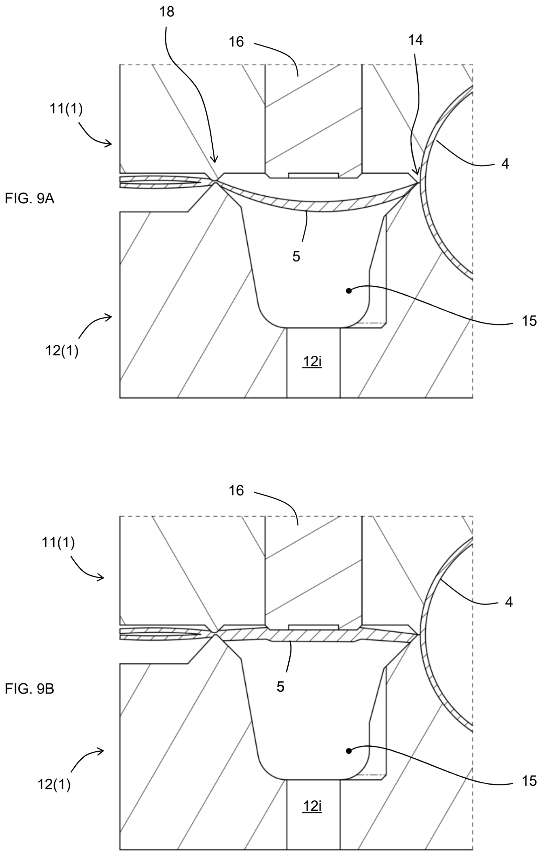

Furthermore, if the inclination angle of the connecting portion 12j becomes too large, the burr 5 is likely to be separated before being pressed by the ejector member 16 as shown in FIGS. 9 to 10, and in that case, the cooling medium directly contacts the pinch-off portion 14 in the cooling step, and the molded product 4 is likely to be cooled through the pinch-off portion 14, which tends to cause defects such as sink marks in the molded product 4. However, by setting the inclination angle of the connecting portion 12j to 60 degrees or less, the occurrence of the above defects is suppressed.

The projection width W of the first portion 12f1 (the length in the direction perpendicular to the extending direction of the pinch-off portion 14 of the projection onto the reference plane 19; shown in FIG. 6C) is, for example, 1 to 20 mm, and preferably 3 to 10 mm. If this value is too small, the effect of providing the first portion 12f1 may not be sufficiently exhibited. If this value is too large, the second split mold 12 tends to interfere with the ejector member 16. This value is, specifically, for example, 1, 2, 3, 4, 5, 6, 7, 8, 9, 10, 11, 12, 13, 14, 15, 16, 17, 18, 19, 20 mm, and may be a range between any two of the numerical values exemplified here.

It is preferable that the inner side surface 12f has a second portion 12f2 at a position farther from the pinch-off portion 14 than the first portion 12f1. The second portion 12f2 may be a flat surface or a curved surface (a flat surface in this embodiment). The second portion 12f2 is preferably provided so as to be continuous with the first portion 12f1. The second portion 12f2 has an inclination angle α2 with respect to the reference plane 19 that is larger than the inclination angle α1 of the first portion 12f1 (in this embodiment, α2 = 75 degrees). According to such a configuration, it becomes difficult for the second split mold 12 to interfere with the ejector member 16. Further, the inclination angle α2 of the second portion 12f2 is, for example, 50 to 85 degrees, and preferably 60 to 80 degrees. The difference between the inclination angle α2 of the second portion 12f2 and the inclination angle α1 of the first portion 12f1 is, for example, 10 to 50 degrees, and preferably 20 to 40 degrees. If this value is too small, the effect of providing the second portion 12f2 may not be sufficiently exhibited. If this value is too large, the burr 5 may get stuck in the groove-shaped recess 12e and become difficult to remove. The inclination angle α2 is, specifically, for example, 50, 55, 60, 65, 70, 75, 80, 85 degrees, and may be a range between any two of the numerical values exemplified here. The difference between the inclination angle α2 and the inclination angle α1 is, specifically, for example, 10, 15, 20, 25, 30, 35, 40, 45, 50 degrees, and may be a range between any two of the numerical values exemplified here.

The projection width of the second portion 12f2 is, for example, 1 to 5 mm, and specifically, for example, 1, 2, 3, 4, 5 mm, and may be a range between any two of the numerical values exemplified here. The projection width of the second portion 12f2 is preferably narrower than the projection width W of the first portion 12f1.

It is preferable that the inner side surface 12f has a third portion 12f3 at a position farther from the pinch-off portion 14 than the second portion 12f2. The third portion 12f3 is preferably provided so as to be continuous with the second portion 12f2. The third portion 12f3 has an inclination angle α3 with respect to the reference plane 19 that is larger than the inclination angle α2 of the second portion 12f2 (in this embodiment, α3 = 90 degrees). According to such a configuration, it becomes even more difficult for the second split mold 12 to interfere with the ejector member 16. Further, the inclination angle α3 of the third portion 12f3 is, for example, 80 to 90 degrees, and preferably 85 to 90 degrees.

As shown in FIG. 7B, the inner side surface 12f is preferably provided with a local recess 12g extending along the advancing/retreating direction of the ejector member 16 at a position facing the ejector member 16 when the ejector member 16 is projected into the groove-shaped recess 12e. By providing the local recess 12g, interference between the second split mold 12 and the ejector member 16 can be avoided, so that the ejector member 16 can be brought closer to the pinch-off portion 14, and the separability of the burr 5 is improved. Further, when the burr 5 is pushed into the local recess 12g, the burr 5 is likely to float at portions other than the local recess 12g due to a reaction force, or the burr 5 is likely to have a wavy shape in the groove-shaped recess 12e, which makes it easier to remove the burr 5 from the groove-shaped recess 12e.

The depth of the local recess 12g (the depth in the direction perpendicular to the advancing/retreating direction of the ejector member 16 (that is, the left-right direction in FIG. 7)) is, for example, 1 to 10 mm, and preferably 2 to 8 mm (5 mm in this embodiment). If this value is too small, the effect of providing the local recess 12g may not be sufficiently exhibited, and if this value is too large, the burr 5 may get stuck in the local recess 12g and become difficult to remove. This value is, specifically, for example, 1, 2, 3, 4, 5, 6, 7, 8, 9, 10 mm, and may be a range between any two of the numerical values exemplified here. The width of the local recess 12g (the length in the extending direction of the pinch-off portion 14) is, for example, 5 to 40 mm, preferably 10 to 30 mm, and more preferably 25 to 35 mm (20 mm in this embodiment). If this value is too small, the effect of providing the local recess 12g may not be sufficiently exhibited, and if this value is too large, the burr 5 may get stuck in the local recess 12g and become difficult to remove. This value is, specifically, for example, 5, 10, 15, 20, 25, 30, 35, 40 mm, and may be a range between any two of the numerical values exemplified here.

As shown in FIG. 9A, the mold for molding 1 preferably includes a burr clamping portion 18. The burr clamping portion 18 is provided on the mating surface 17 of the first and second split molds 11, 12 on the outside of the pinch-off portion 14. The burr accommodating space 15 is provided between the pinch-off portion 14 and the burr clamping portion 18. The burr clamping portion 18 clamps the burr 5 on the outside of the burr accommodating space 15, which makes it difficult for the burr 5 to be displaced when the ejector member 16 is projected toward the burr 5, thereby improving the separability of the burr 5. In order to prevent the burr 5 from being separated on the burr clamping portion 18 side when the ejector member 16 is projected toward the burr 5, it is preferable that the burr 5 is clamped by the burr clamping portion 18 but is not thinned as much as the pinch-off portion 14. Therefore, it is preferable that, in a state where the first and second split molds 11, 12 are closed, the distance between the first and second split molds 11, 12 at the burr clamping portion 18 is larger than the distance between the first and second split molds 11, 12 at the pinch-off portion 14.

The distance D (shown in FIG. 7B) between the pinch-off portion 14 and the burr clamping portion 18 is, for example, 20 to 150 mm, and preferably 30 to 100 mm (40 mm in this embodiment). If this distance is too small, the force applied by the ejector member 16 also acts strongly on the portion of the burr 5 clamped by the burr clamping portion 18, and the burr 5 may be easily separated at this portion. If this distance is too large, the separability of the burr 5 may be lowered. The distance D is, specifically, for example, 20, 30, 40, 50, 60, 70, 80, 90, 100, 110, 120, 130, 140, 150 mm, and may be a range between any two of the numerical values exemplified here.

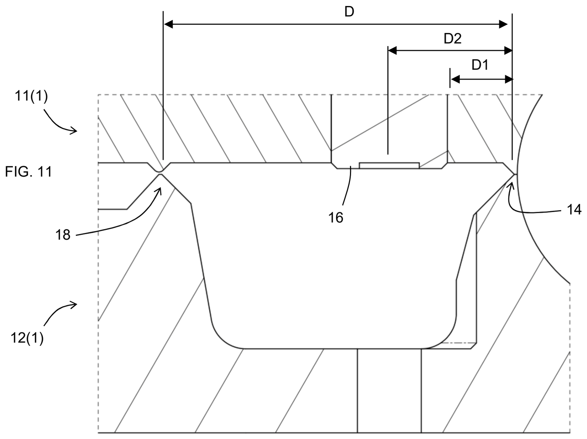

D1/D is preferably 0.40 or less, and more preferably 0.30 or less (0.25 in this embodiment). D1/D is, for example, 0.05 to 0.50, and preferably 0.15 to 0.40. Further, D2/D is preferably 0.50 or less, and more preferably 0.35 or less (0.50 in this embodiment). D2/D is, for example, 0.10 to 0.70, and preferably 0.10 to 0.50. If these values are too small, the ejector member 16 tends to interfere with the second split mold 12, and if these values are too large, the separability of the burr 5 may be deteriorated. D1/D is, specifically, for example, 0.05, 0.10, 0.15, 0.20, 0.25, 0.30, 0.35, 0.40, 0.45, 0.50, and may be a range between any two of the numerical values exemplified here or any value less than or equal to any of them. D2/D is, specifically, for example, 0.10, 0.15, 0.20, 0.25, 0.30, 0.35, 0.40, 0.45, 0.50, 0.55, 0.60, 0.65, 0.70, and may be a range between any two of the numerical values exemplified here or any value less than or equal to any of them. The ejector member may be disposed at the center in the width direction of the groove-shaped recess 12e as shown in FIG. 7B, or may be disposed at a position closer to the pinch-off portion 14 in the groove-shaped recess 12e as shown in FIG. 11. In the latter case, D2/D is a value smaller than 0.50.

As shown in FIG. 6C, the groove-shaped recess 12e includes an outer side surface 12h extending from the burr clamping portion 18 toward the bottom of the groove-shaped recess 12e. The outer side surface 12h preferably has a first portion 12h1 with an inclination angle of 60 degrees or less with respect to the reference plane 19. By providing such a portion on the outer side surface 12h, it is suppressed that the separated burr 5 gets stuck in the groove-shaped recess 12e and becomes difficult to remove. The angle of the first portion 12h1 is, for example, 15 to 60 degrees, preferably 20 to 55 degrees, and more preferably 25 to 50 degrees (45 degrees in this embodiment). This value is, for example, specifically, 15, 20, 25, 30, 35, 40, 45, 50, 55, 60 degrees, and may be a range between any two of the numerical values exemplified here or any value less than or equal to any of them.

The first portion 12h 1 is preferably provided at a position shallower than the center in the depth direction of the groove-shaped recess 12e, and more preferably provided so as to be continuous with the burr clamping portion 18. The projection width of the first portion 12h1 is, for example, 1 to 20 mm, and preferably 3 to 10 mm. If this value is too small, the effect of providing the first portion 12h1 may not be sufficiently exhibited. If this value is too large, the second split mold 12 tends to interfere with the ejector member 16. This value is, specifically, for example, 1, 2, 3, 4, 5, 6, 7, 8, 9, 10, 11, 12, 13, 14, 15, 16, 17, 18, 19, 20 mm, and may be a range between any two of the numerical values exemplified here.

The outer side surface 12h has a second portion 12h2 at a position farther from the burr clamping portion 18 than the first portion 12h1. The second portion 12h2 is preferably provided so as to be continuous with the first portion 12h1. The second portion 12h2 has an inclination angle with respect to the reference plane 19 that is larger than that of the first portion 12h1 (80 degrees in this embodiment). The description of the first portion 12h1 and the second portion 12h2 is the same as the description of the first portion 12f1 and the second portion 12f2.

In the molding using the above-described mold for molding 1, first, as shown in FIG. 1, a parison 2 is placed between the first and second split molds 11, 12 in an open state, and in that state, the first and second split molds 11, 12 are closed to form a cavity 13, and the parison 2 is molded to form a molded body 3. A portion of the parison 2 disposed in the cavity 13 is molded into the shape of the molded product 4, and a portion disposed outside the cavity 13 becomes a burr 5. By the above steps, the structure shown in FIG. 9A is obtained.

### 2. Cooling Step

As shown in FIG. 9B, in the cooling step, the burr 5 in the burr accommodating space 15 is cooled. The cooling of the burr 5 is preferably performed by blowing a cooling medium (e.g., air) onto the burr 5. Further, the cooling of the burr 5 is preferably performed by blowing a cooling medium onto the burr 5 through a burr cooling hole 12i provided in the second split mold 12. In this case, the burr 5 is cooled while being pressed against the first split mold 11 side by the cooling medium. This makes it easier for the force applied by the ejector member 16 to be transmitted to the burr 5, and the burr 5 is more likely to be separated. Further, at the time of performing the cooling step, it is preferable that the ejector member 16 projects from the first split mold 11. In this case, when the burr 5 is pressed against the first split mold 11 side, the ejector member 16 is likely to bite into the burr 5, and the force applied by the ejector member 16 is likely to be transmitted to the burr 5. The projection amount of the ejector member 16 is, for example, 0.5 to 3 mm, and preferably 1.0 to 2.0 mm. The cooling step can be omitted if unnecessary.

### 3. Separating Step

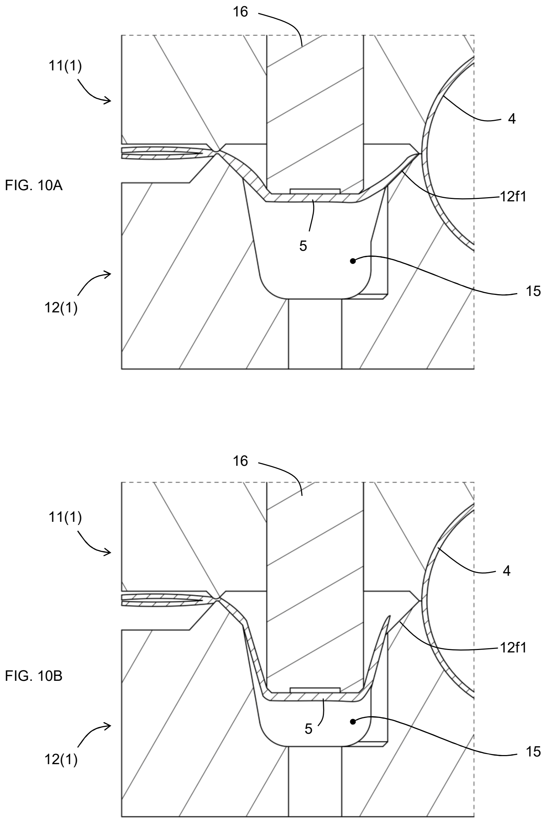

As shown in FIGS. 10A to 10B, in the separating step, the burr 5 is separated from the molded product 4 by projecting the ejector member 16 into the burr accommodating space 15. In the mold for molding 1 of this embodiment, since the inner side surface 12f of the groove-shaped recess 12e provided along the pinch-off portion 14 is provided with the first portion 12f1 having a gentle inclination angle of 60 degrees or less, the burr 5 is separated from the molded product 4 through the states shown in FIGS. 10A and 10B. In this case, the burr 5 is separated from the molded product 4 by being pressed by the ejector member 16 while being supported by the first portion 12f1 having a relatively gentle inclination. According to such a configuration, it is suppressed that the burr 5 separated from the molded product 4 gets stuck in the groove-shaped recess 12e and becomes difficult to remove, and a decrease in the manufacturing efficiency of the molded product 4 is suppressed. In the separating step, it is preferable to separate the burr 5 over the entire circumference of the molded product 4, but the burr 5 may be separated at a part of the outer circumference of the molded product 4. In this case, the burr 5 can be separated from the molded product 4 by separating the unseparated portion in a post-processing step after the molded product 4 and the burr 5 are taken out together from the mold for molding 1.

### [Reference Signs List]

1: mold for molding, 2: parison, 3: molded body, 4: molded product, 5: burr, 5a: thin-walled portion, 11: first split mold, 11a: split cavity surface, 11b: split cavity, 11c: protruding ridge, 11d: guide hole, 11e: groove-shaped recess, 11j: connecting portion, 12: second split mold, 12a: split cavity surface, 12b: split cavity, 12c: protruding ridge, 12e: groove-shaped recess, 12f: inner side surface, 12f1: first portion, 12f2: second portion, 12f3: third portion, 12g: local recess, 12h: outer side surface, 12h1: first portion, 12h2: second portion, 12i: burr cooling hole, 12j: connecting portion, 12k: bottom, 13: cavity, 13a: cavity outer surface, 14: pinch-off portion, 15: burr accommodating space, 16: ejector member, 16a: tip surface, 16b: recess, 16c: tapered surface, 17: mating surface, 18: burr clamping portion, 19: reference surface, W: projection width

## Claims

1. A mold for molding comprising a first split mold and a second split mold which are configured to open and close relative to each other, comprising:
a cavity, a pinch-off portion, a burr accommodating space, and an ejector member,
wherein the cavity is a space for molding a desired molded product, and an outer surface of the cavity is configured by mating cavity surfaces provided on each of the first and second split molds,
the pinch-off portion is provided on a mating surface of the first and second split molds so as to surround the cavity,
the burr accommodating space is a space provided outside the pinch-off portion for accommodating a burr formed around the molded product,
the first split mold comprises a guide hole at a portion facing the burr accommodating space,
the ejector member is configured to be able to advance and retract with respect to the burr accommodating space through the guide hole,
the second split mold comprises a groove-shaped recess provided facing the burr accommodating space and along the pinch-off portion,
the groove-shaped recess comprises an inner side surface extending from the pinch-off portion toward a bottom of the groove-shaped recess, and
the inner side surface has a first portion with an inclination angle of 60 degrees or less with respect to a reference plane perpendicular to an opening/closing direction of the first and second split molds.

2. The mold for molding according to Claim 1, wherein
the inner side surface has a second portion at a position farther from the pinch-off portion than the first portion, and
the second portion has an inclination angle with respect to the reference plane that is larger than that of the first portion.

3. The mold for molding according to Claim 1, wherein
the inner side surface is provided with a local recess extending along an advancing/retreating direction of the ejector member at a position facing the ejector member when the ejector member is projected into the groove-shaped recess.

4. The mold for molding according to Claim 1, wherein
the mold for molding comprises a burr clamping portion,
the burr clamping portion is provided on the mating surface of the first and second split molds outside the pinch-off portion, and
the burr accommodating space is provided between the pinch-off portion and the burr clamping portion.

5. The mold for molding according to Claim 4, wherein
the groove-shaped recess comprises an outer side surface extending from the burr clamping portion toward the bottom of the groove-shaped recess, and
the outer side surface has a first portion with an inclination angle of 60 degrees or less with respect to the reference plane.

6. A method for manufacturing a molded product, comprising:
a molding step and a separating step,
wherein in the molding step, a molded body is formed by molding a parison using the mold for molding according to any one of Claims 1 to 5,
the molded body comprises the molded product formed in the cavity and the burr connected to a periphery of the molded product, and
the separating step comprises a step of separating the burr from the molded product by projecting the ejector member into the burr accommodating space.

7. A mold for molding comprising a first split mold and a second split mold which are configured to open and close relative to each other, comprising:
a cavity, a pinch-off portion, a burr accommodating space, and an ejector member,
wherein the cavity is a space for molding a desired molded product, and an outer surface of the cavity is configured by mating cavity surfaces provided on each of the first and second split molds,
the pinch-off portion is provided on a mating surface of the first and second split molds so as to surround the cavity,
the burr accommodating space is a space provided outside the pinch-off portion for accommodating a burr formed around the molded product,
the first split mold comprises a guide hole at a portion facing the burr accommodating space,
the ejector member is configured to be able to advance and retract with respect to the burr accommodating space through the guide hole,
the second split mold comprises a groove-shaped recess provided facing the burr accommodating space and along the pinch-off portion,
the groove-shaped recess comprises an inner side surface extending from the pinch-off portion toward a bottom of the groove-shaped recess,
the inner side surface has a first and a second portion, and
the second portion is provided at a position farther from the pinch-off portion than the first portion and has an inclination angle with respect to a reference plane perpendicular to an opening/closing direction of the first and second split molds that is larger than that of the first portion.

8. A mold for molding comprising a first split mold and a second split mold which are configured to open and close relative to each other, comprising:
a cavity, a pinch-off portion, a burr accommodating space, and an ejector member,
wherein the cavity is a space for molding a desired molded product, and an outer surface of the cavity is configured by mating cavity surfaces provided on each of the first and second split molds,
the pinch-off portion is provided on a mating surface of the first and second split molds so as to surround the cavity,
the burr accommodating space is a space provided outside the pinch-off portion for accommodating a burr formed around the molded product,
the first split mold comprises a guide hole at a portion facing the burr accommodating space,
the ejector member is configured to be able to advance and retract with respect to the burr accommodating space through the guide hole,
the second split mold comprises a groove-shaped recess provided facing the burr accommodating space and along the pinch-off portion,
the groove-shaped recess comprises an inner side surface extending from the pinch-off portion toward a bottom of the groove-shaped recess, and
the inner side surface is provided with a local recess extending along an advancing/retreating direction of the ejector member at a position facing the ejector member when the ejector member is projected into the groove-shaped recess.
